(19) **Europäisches Patentamt / European Patent Office / Office européen des brevets**

(11) **EP 4 715 071 A1**

(12) **EUROPEAN PATENT APPLICATION**
published in accordance with Art. 153(4) EPC

(43) Date of publication:
25.03.2026 Bulletin 2026/13

(21) Application number: 24806892.6

(22) Date of filing: 08.04.2024

(51) International Patent Classification (IPC):
$C22B\ 7/00^{(2006.01)}$     $B09B\ 3/70^{(2022.01)}$
$B09B\ 3/80^{(2022.01)}$     $B09B\ 5/00^{(2006.01)}$
$C22B\ 3/14^{(2006.01)}$     $C22B\ 3/16^{(2006.01)}$
$C22B\ 23/00^{(2006.01)}$     $H01M\ 10/54^{(2006.01)}$
$B09B\ 101/16^{(2022.01)}$

(52) Cooperative Patent Classification (CPC):
Y02P 10/20; Y02W 30/84

(86) International application number:
PCT/JP2024/014200

(87) International publication number:
WO 2024/236938 (21.11.2024 Gazette 2024/47)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 15.05.2023 JP 2023079806

(71) Applicant: **MEC COMPANY., LTD.**
**Amagasaki-shi, Hyogo 660-0822 (JP)**

(72) Inventors:
• **MURAGISHI,Kengo**
**Amagasaki-shi, Hyogo 660-0822 (JP)**
• **MATSUMOTO,Keisuke**
**Amagasaki-shi, Hyogo 660-0822 (JP)**

(74) Representative: **TBK**
**Bavariaring 4-6**
**80336 München (DE)**

(54) **METHOD FOR PROCESSING LITHIUM-ION BATTERY WASTE**

(57) A method for processing a lithium-ion battery waste by hydrometallurgical processing of the lithium-ion battery waste to obtain a leachate in which at least cobalt and nickel are dissolved, the method comprising:
a hydrometallurgical processing step of adding at least one compound (1) selected from the group consisting of ammonia and a salt thereof, and an amine compound and a salt thereof to the lithium-ion battery waste and mixing them to obtain the leachate in which at least the cobalt and the nickel are dissolved; and
a solid-liquid separation step of removing at least a part of metals not dissolved in the leachate by solid-liquid separation after the hydrometallurgical processing step.

EP 4 715 071 A1

**Description**

TECHNICAL FIELD

The present invention relates to a method for processing a lithium-ion battery waste.

BACKGROUND ART

From the viewpoint of SDGs, it has been widely studied to recover and reuse valuable metals such as cobalt and nickel from a lithium-ion battery waste.

When valuable metals such as cobalt and nickel are recovered from the lithium-ion battery waste, processing such as roasting and pulverization is performed on the lithium-ion battery waste, and the obtained lithium-ion battery powder is added to an acidic solution to obtain a leachate in which lithium, copper, cobalt, nickel, iron, aluminum, manganese, and the like are dissolved. Subsequently, solid-liquid separation and solvent extraction are repeatedly performed to obtain a solution in which desired valuable metals such as cobalt and nickel are dissolved. Finally, nickel and cobalt are recovered from each solution by performing electrolysis or the like.

For example, Patent Document 1 below describes a method for processing a lithium-ion battery waste, including performing a pre-stage neutralization step of neutralizing a pH of an acidic solution, which is obtained by subjecting a lithium-ion battery waste to hydrometallurgical processing and in which at least cobalt, nickel, manganese and aluminum are dissolved, to 4.0 to 6.0, precipitating a part of aluminum, and removing the part of aluminum by solid-liquid separation, and a post-stage neutralization step of neutralizing a pH of the resulting solution to 11.0 or more after the pre-stage neutralization step, leaving the remaining part of aluminum in the solution, and obtaining a neutralization residue containing cobalt, nickel and manganese by solid-liquid separation.

PRIOR ART DOCUMENT

PATENT DOCUMENT

Patent Document 1: JP-A-2020-180362

SUMMARY OF THE INVENTION

PROBLEMS TO BE SOLVED BY THE INVENTION

As a result of intensive studies on the processing method described in Patent Document 1, the present inventors have found that it is difficult to efficiently remove aluminum and iron to be removed from a leachate, and there is room for further improvement in leaching desired valuable metals such as nickel and cobalt at a high leaching rate.

In view of the above, an object of the present invention is to provide a method for processing a lithium-ion battery waste having excellent recovery rates of desired valuable metals such as nickel and cobalt.

MEANS FOR SOLVING THE PROBLEMS

The above problem can be solved by the following configuration. That is, the present invention relates to a method (1) for processing a lithium-ion battery waste by hydrometallurgical processing the lithium-ion battery waste to obtain a leachate in which at least cobalt and nickel are dissolved, the method including: a hydrometallurgical processing step of adding at least one compound (1) selected from the group consisting of ammonia and a salt thereof, and an amine compound and a salt thereof to the lithium-ion battery waste and mixing them to obtain the leachate in which at least the cobalt and the nickel are dissolved; and a solid-liquid separation step of removing at least a part of metals not dissolved in the leachate by solid-liquid separation after the hydrometallurgical processing step.

In the method (1) for processing a lithium-ion battery waste, a method (2) for processing a lithium-ion battery waste in which an acid is added in addition to the compound (1) and mixed in the hydrometallurgical processing step is preferred.

In the method (2) for processing a lithium-ion battery waste, a method (3) for processing a lithium-ion battery waste in which the acid is at least one compound (2) selected from the group consisting of a monocarboxylic acid organic acid and an inorganic acid is preferred.

In any one of the methods (1) to (3) for processing a lithium-ion battery waste, a method (4) for processing a lithium-ion battery waste in which the compound (1) is at least one compound selected from the group consisting of an amine compound having an amino group and a salt thereof is preferred.

In any one of the methods (1) to (4) for processing a lithium-ion battery waste, a method (5) for processing a lithium-ion battery waste in which the compound (1) is at least one compound selected from the group consisting of a chelating amine compound having two or more amino groups and a salt thereof is preferred.

In any one of the above methods (1) to (5) for processing a lithium-ion battery waste, a method (6) for processing a lithium-ion battery waste in which the lithium-ion battery waste contains aluminum, and at least a part of the aluminum is removed in the solid-liquid separation step is preferred.

In any one of the above methods (1) to (6) for processing a lithium-ion battery waste, a method (7) for processing a lithium-ion battery waste in which the lithium-ion battery waste contains iron, and at least a part of the iron is removed in the solid-liquid separation step is preferred.

In any one of the above methods (1) to (7) for processing a lithium-ion battery waste, a method (8) for processing a lithium-ion battery waste in which the lithium-ion battery waste contains manganese, and at least a part of the manganese is removed in the solid-liquid separation step is preferred.

EFFECT OF THE INVENTION

According to the method for processing a lithium-ion battery waste according to the present invention, by including a hydrometallurgical processing step of adding at least one compound selected from the group consisting of ammonia and a salt thereof, and an amine compound and a salt thereof to the lithium-ion battery waste and mixing them to obtain the leachate in which at least cobalt and nickel are dissolved, at least aluminum, iron, manganese, and the like that are not for the purpose of recovery of other than cobalt and nickel can be removed by a simple operation such as solid-liquid separation, and thus desired valuable metals such as nickel and cobalt can be recovered at a high recovery rate.

MODE FOR CARRYING OUT THE INVENTION

The present invention is a method for processing a lithium-ion battery waste by hydrometallurgical processing the lithium-ion battery waste to obtain a leachate in which at least cobalt and nickel are dissolved, the method including at least a hydrometallurgical processing step and a solid-liquid separation step.

The lithium-ion battery waste is a waste of lithium-ion batteries used in various devices such as electric vehicles, mobile phones, and personal computers. In a lithium-ion battery, a positive electrode having lithium cobaltate or the like as a main active material, a negative electrode having special carbon as a main active material, a separator, and the like are usually laminated or spirally wound in a state of containing an electrolytic solution, and further disposed in an exterior material such as aluminum.

The lithium-ion battery waste is usually subjected to a preprocessing such as roasting or crushing before the hydrometallurgical processing step. In the roasting processing, the lithium-ion battery is heated and held at, for example, 500 to 1000°C for several hours. Heating and holding may be performed in a furnace or in the atmosphere. In the crushing processing, a pulverizer such as a sample mill, a hammer mill, or a hammer crusher is used. In the present invention, preprocessing other than roasting and crushing may be performed before the hydrometallurgical processing step as necessary. For example, a certain amount of lithium may be recovered from the lithium-ion battery powder by subjecting the lithium-ion battery waste to a preprocessing such as roasting and pulverization to form a finely powdered lithium-ion battery powder and then bringing the powder into contact with, for example, ion-exchanged water.

The lithium-ion battery waste contains lithium, copper, cobalt, nickel, iron, aluminum, manganese, and the like. The concentration of each metal contained in the lithium-ion battery waste can be measured, for example, by the following method. Specifically, the lithium-ion battery waste is subjected to a preprocessing such as roasting and pulverization to form a finely powdered lithium-ion battery powder, and then the lithium-ion battery powder is added to, for example, aqua regia (hydrochloric acid/nitric acid = 3/1 solution) to obtain a leachate in which lithium, copper, cobalt, nickel, iron, aluminum, manganese, and the like are dissolved. The leachate is preferably one obtained by leaching lithium-ion battery powder with an acidic solution such as aqua regia. The pH of the leachate after addition of aqua regia is preferably, for example, 0.0 to 1.0. As a condition for obtaining the leachate, for example, a condition in which 1.0 to 10.0 g of lithium-ion battery powder is added per 50.0 to 500.0 g of aqua regia, and the mixture is leached at 25 to 80°C for 1 to 72 hours at a stirring speed of 250 to 1500 rpm can be exemplified. After leaching, solid-liquid separation is performed using a suction filtration machine or the like, and the concentration of each metal in the obtained filtrate is measured. The concentration of each metal in the leachate can be measured by, for example, an ICP optical emission spectrometer (Inductively coupled plasma optical emission spectrometer; ICP-OES). In the present invention, the recovery rate of cobalt, nickel, and the like is calculated based on the leachate (filtrate) after addition of aqua regia to the lithium-ion battery waste. This point will be described later.

(Hydrometallurgical processing step)

In the hydrometallurgical processing step, at least one compound (1) selected from the group consisting of ammonia and a salt thereof, and an amine compound and a salt thereof is added to and mixed with the lithium-ion battery waste to obtain a leachate in which at least cobalt and nickel are dissolved.

The compound (1) is at least one compound selected from the group consisting of ammonia and a salt thereof, and an amine compound and a salt thereof. Examples of the salt of ammonia (ammonium salt) include ammonium chloride. Examples of the amine compound include ethylenediamine, tris(2-ethylamino)amine, imidazole, 2-piperazine, triethanolamine, L-lysine, and aminoguanidine. Examples of the salt of the amine compound include ethylenediamine dihydrochloride, 2-piperazine hydrochloride, 2-piperazine hydrochloride monohydrate, cysteamine hydrochloride, triethanolamine hydrochloride, L-lysine hydrochloride, and aminoguanidine hydrochloride. Ammonia and a salt thereof, and an amine compound and a salt thereof may be used alone or in combination. For example, an ammonium salt and ammonia may be combined, or a salt of an amine compound and ammonia may be combined. More specifically, for example, ammonium chloride and ammonia may be combined, 2-piperazine hydrochloride monohydrate and ammonia may be combined, cysteamine hydrochloride and ammonia may be combined, ethylenediamine dihydrochloride and ammonia may be combined, triethanolamine hydrochloride and ammonia may be combined, L-lysine hydrochloride and ammonia may be combined, and aminoguanidine hydrochloride and ammonia may be combined.

In the present invention, among the compounds (1), at least one compound selected from the group consisting of an amine compound having an amino group and a salt thereof is preferred, and at least one compound selected from the group consisting of a chelating amine compound having two or more amino groups and a salt thereof is further preferred. Specifically, for example, when ethylenediamine, tris(2-ethylamino)amine, 2-piperazine hydrochloride monohydrate, ethylenediamine dihydrochloride, or L-lysine hydrochloride is used, the recovery rates of desired valuable metals such as nickel and cobalt can be further increased, which is preferable.

In order to increase the recovery rates of desired valuable metals such as nickel and cobalt, in the hydrometallurgical processing step, it is preferable to remove at least a part of metals other than cobalt and the nickel by adding an acid to the lithium-ion battery waste in addition to the compound (1) and mixing them, and it is further preferable to remove at least a part of metals other than cobalt and nickel by adding at least one compound (2) selected from the group consisting of a monocarboxylic acid organic acid and an inorganic acid as an acid and mixing them. Examples of the monocarboxylic acid organic acid include formic acid and acetic acid. In addition, examples of the inorganic acid include hydrochloric acid and hydrobromic acid.

When the compound (2) is added in addition to the compound (1) in the hydrometallurgical processing step, the molar ratio of the compound (2) : the compound (1) is preferably 1 : 1 to 1 : 6, more preferably 1 : 1 to 1 : 2. The recovery rates of desired valuable metals such as nickel and cobalt can be further increased by setting the molar ratio in the above range.

In order to increase the recovery rates of desired valuable metals such as nickel and cobalt, in the hydrometallurgical processing step, the pH of the leachate after adding only the compound (1) or the pH of the leachate after adding the compound (1) and the compound (2) is preferably adjusted to 3.0 to 12.5, and more preferably adjusted to 9.5 to 11.0. In addition, it is preferable to set the temperature of the leachate to 25 to 80°C and stir the leachate at a stirring speed of 500 to 1000 rpm for 8 to 24 hours.

(Solid-liquid separation step)

Examples of the removal method for removing at least a part of undissolved metals from the leachate obtained in the hydrometallurgical processing step include a method in which a leachate in which at least cobalt and nickel are dissolved and a precipitate of, for example, aluminum or iron to be removed are separated by solid-liquid separation. In the method for processing a lithium-ion battery waste according to the present invention, it is possible to recover desired valuable metals such as nickel and cobalt at a high recovery rate, and specifically, for example, when a solid-liquid separation step is performed after the hydrometallurgical processing step, the recovery rates of cobalt and nickel obtained thereafter are 50% or more, further preferably 70% or more. In the present invention, the recovery rates of cobalt, nickel, and the like can be calculated by Formula (1) below.

(Recovery rate (%) of each metal) = (Metal concentration in leachate (filtrate) obtained after hydrometallurgical processing step)/(Metal concentration in leachate (filtrate) after addition of aqua regia to lithium-ion battery waste) $\times$ 100     Formula (1)

In the method for processing a lithium-ion battery waste according to the present invention, the lithium-ion battery waste contains aluminum, and when at least a part of aluminum is removed in the solid-liquid separation step, the recovery rate of aluminum calculated by Formula (1) is reduced, that is, the residual amount of aluminum is reduced, which is preferable. Specifically, for example, the residual rate of aluminum after the hydrometallurgical processing step is 30% or less, further preferably 10% or less.

In the method for processing a lithium-ion battery waste according to the present invention, the lithium-ion battery waste contains iron, and when at least a part of iron is removed in the solid-liquid separation step, the recovery rate of iron calculated by Formula (1) is reduced, that is, the residual rate of iron is reduced, which is preferable. Specifically, for example, the residual rate of iron after the hydrometallurgical processing step is 30% or less, further preferably 10% or less.

In the method for processing a lithium-ion battery waste according to the present invention, the lithium-ion battery waste contains manganese, and when at least a part of manganese is removed in the solid-liquid separation step, the recovery rate of manganese calculated by Formula (1) is reduced, that is, the residual rate of manganese is reduced, which is preferable. Specifically, for example, the residual rate of manganese after the hydrometallurgical processing step is 30% or less, further preferably 10% or less.

In the method for processing a lithium-ion battery waste according to the present invention, even when the lithium-ion battery waste contains lithium, the recovery rate of lithium calculated by Formula (1) is relatively high in the solid-liquid separation step, which is preferable. Specifically, for example, the recovery rate of lithium after the hydrometallurgical processing step is 10% or more, further preferably 35% or more.

In the method for processing a lithium-ion battery waste according to the present invention, even when the lithium-ion battery waste contains copper, the recovery rate of copper calculated by Formula (1) is relatively high in the solid-liquid separation step, which is preferable. Specifically, for example, the recovery rate of copper after the hydrometallurgical processing step is 10% or more, further preferably 35% or more.

In the method for processing a lithium-ion battery waste according to the present invention, when the solid-liquid separation step is performed after the hydrometallurgical processing step, among the metals contained in the leachate (filtrate) obtained thereafter, the recovery rates of cobalt and nickel are high, and the residual rates of unnecessary metals, particularly aluminum and iron, are small. Therefore, the method for processing a lithium-ion battery waste according to the present invention is particularly useful as a method for recovering cobalt and nickel from a lithium-ion battery waste. For example, by performing an extraction operation using an extractant known to those skilled in the art, only cobalt or only nickel can be recovered from the filtrate finally obtained after the hydrometallurgical processing step.

EXAMPLES

Hereinafter, an example of an embodiment according to the present invention will be described, but the present invention is not limited to such description at all.

(Measurement of concentration of each metal contained in lithium-ion battery waste)

1.0 g of lithium-ion battery powder obtained by performing roasting and crushing processing on a lithium-ion battery waste was added to 50.0 g of aqua regia (hydrochloric acid/nitric acid = 3/1), and the mixture was mixed under the condition of 25°C for 24 hours, and a stirring speed of 500 to 750 rpm to obtain a leachate. The leachate was subjected to solid-liquid separation using a suction filtration machine, and the metal concentration of the obtained filtrate was measured. For the measurement of the metal concentration, ICP was used. The results are shown in Table 1.

[Table 1]

| Metal element (ppm) contained in 1.0 g of filtrate | | | | | | |
|------|------|------|------|------|------|------|
| Co | Ni | Fe | Al | Mn | Li | Cu |
| 1952 | 3582 | 39 | 1011 | 1921 | 380 | 96 |

(Hydrometallurgical processing step/solid-liquid separation step)

1.0 g of the lithium-ion battery powder was added to and mixed with 50.0 g of the processed water. As the processed water, only ion-exchanged water and compound (1), or ion-exchanged water and compound (1) and compound (2) adjusted at the ratios shown in Tables 2 and 3 were used. The lithium battery powder and the processed water were mixed under the condition of 25°C for 24 hours, and a stirring speed of 500 to 750 rpm (hydrometallurgical processing step), and then subjected to solid-liquid separation using a suction filtration machine (solid-liquid separation step), and the metal concentration of the obtained filtrate was measured. ICP was used for the measurement of the concentration. The results are shown in Table 2 and Table 3. The recovery rates of each metal in Tables 2 and 3 were calculated using Formula (1) above and evaluated according to the following criteria.

· Recovery rates of metals to be recovered (cobalt (Co) and nickel (Ni)); 70% or more was evaluated as "o", 50% or more and less than 70% was evaluated as "△", and 50% or less was evaluated as "×".

· Recovery rates of metals not to be recovered (iron (Fe), aluminum (Al) and manganese (Mn)); 10% or less was evaluated as "∘", 10% or more and less than 30% was evaluated as "△", and 30% or more was evaluated as "×". As to the metals not to be recovered, as the recovery rate is higher, the metals remain in the filtrate together with the metals to be recovered and are recovered, and the metals to be recovered cannot be selectively recovered, which is not preferable.

· Recovery rates of other metals (lithium (Li) and copper (Cu)); 35% or more was evaluated as "o", 10% or more and less than 35% was evaluated as "△", and 10% or less was evaluated as "×".

[Table 2]

| | Ion-exchanged water (wt%) | Compound (1) Type | Compound (1) (wt%) | Compound (2) Type | Compound (2) (wt%) | Compound (2)/Compound (1) (molar ratio) | pH | Metals to be recovered Co | Metals to be recovered Ni | Metals not to be recovered Fe | Metals not to be recovered Al | Metals not to be recovered Mn | Other metals Li | Other metals Cu |
|---|---|---|---|---|---|---|---|---|---|---|---|---|---|---|
| Comparative Example 1 | 90 | - | - | Sulfuric acid | 10 | - | 0.54 | ○ | ○ | × | × | × | ○ | ○ |
| Comparative Example 2 | 90 | - | - | Hydrochloric acid | 10 | - | 0.1 | ○ | ○ | × | × | × | ○ | ○ |
| Comparative Example 3 | 90 | - | - | Formic acid | 10 | - | 1.69 | ○ | ○ | × | × | × | ○ | ○ |
| Example 1 | 90 | Ethylenediamine | 10 | - | 10 | - | 12.54 | ○ | ○ | ○ | △ | ○ | ○ | ○ |
| Example 2 | 90 | Tris(2-ethylamino) amine | 10 | - | 10 | - | 12.4 | ○ | ○ | ○ | △ | ○ | ○ | ○ |
| Example 3 | 90 | Ethylenediamine | 6 | Formic acid | 4 | Compound (2)/Compound (1) = 7/10 | 10.11 | ○ | ○ | ○ | ○ | ○ | ○ | ○ |
| Example 4 | 90 | Ethylenediamine | 6 | Acetic acid | 4 | Compound (2)/Compound (1) = 3/5 | 10.15 | ○ | ○ | ○ | ○ | ○ | ○ | ○ |
| Example 5 | 90 | Ethylenediamine | 6 | Malic acid | 4 | Compound (2)/Compound (1) = 3/10 | 10.34 | ○ | ○ | ○ | × | △ | ○ | ○ |
| Example 6 | 90 | Ethylenediamine | 6 | Hydrochloric acid | 4 | Compound (2)/Compound (1) = 2/5 | 10.49 | ○ | ○ | ○ | ○ | ○ | ○ | ○ |
| Example 7 | 90 | Ethylenediamine | 6 | Hydrobromic acid | 4 | Compound (2)/Compound (1) = 1/2 | 10.75 | △ | △ | ○ | ○ | × | ○ | × |
| Example 8 | 90 | Tris(2-ethylamino) amine | 6 | Formic acid | 4 | Compound (2)/Compound (1) = 7/4 | 9.73 | ○ | ○ | ○ | ○ | ○ | ○ | ○ |

| | Ion-exchanged water (wt%) | Compound (1) | | Compound (2) | | Compound (2) /Compound (1) (molar ratio) | pH | Recovery rate (%) | | | | | | |
|---|---|---|---|---|---|---|---|---|---|---|---|---|---|---|
| | | | | | | | | Metals to be recovered | | Metals not to be recovered | | | Other metals | |
| | | Type | (wt%) | Type | (wt%) | | | Co | Ni | Fe | Al | Mn | Li | Cu |
| Example 9 | 90 | Imidazole | 6 | Formic acid | 4 | Compound (2) /Compound (1) = 7/9 | 6.88 | ○ | ○ | ○ | ○ | × | ○ | ○ |

Comparative Examples 1 to 3 are conventionally known processing methods using an organic acid or an inorganic acid, and it is found that not only cobalt and nickel which are metals to be recovered but also aluminum, iron, and manganese which are metals not to be recovered are recovered at the same time, and cobalt and nickel cannot be selectively recovered. On the other hand, Examples 1 to 9 are methods for processing a lithium-ion battery waste according to the present invention, and it is found that cobalt and nickel which are metals to be recovered can be selectively recovered while the recovery rates of aluminum, iron, and manganese which are metals not to be recovered are reduced. In particular, in Examples 3, 4, 6, and 8 in which a chelating amine compound having two or more amino groups was used as the compound (1) and a monocarboxylic acid organic acid or inorganic acid was used as the compound (2), the recovery rates of desired valuable metals such as nickel and cobalt were particularly excellent.

[Table 3]

| | Ion-exchanged water (wt%) | Compound (1) | | pH | Recovery rate (%) | | | | | | |
| | | Type | (wt%) | | Metals to be recovered | | Metals not to be recovered | | | Other metals | |
| | | | | | Co | Ni | Fe | Al | Mn | Li | Cu |
| Example 10 | 75 | Ammonium chloride + ammonia | 25 | 9.86 | ○ | ○ | ○ | ○ | ○ | ○ | ○ |
| Example 11 | 90 | 2-Piperazine hydrochloride monohydrate | 10 | 3.11 | ○ | ○ | ○ | ○ | × | ○ | △ |
| Example 12 | 75 | 2-piperazine hydrochloride monohydrate + ammonia | 25 | 10.1 | ○ | ○ | ○ | ○ | ○ | ○ | ○ |
| Example 13 | 75 | Cysteamine hydrochloride + ammonia | 25 | 10.09 | ○ | ○ | ○ | ○ | ○ | ○ | ○ |
| Example 14 | 90 | Ethylenediamine dihydrochloride | 10 | 3.84 | ○ | ○ | ○ | ○ | × | ○ | ○ |
| Example 15 | 75 | Ethylenediamine dihydrochloride + ammonia | 25 | 10.07 | ○ | ○ | ○ | ○ | ○ | ○ | ○ |
| Example 16 | 75 | Triethanolamine hydrochloride + ammonia | 25 | 10.23 | ○ | ○ | △ | × | × | ○ | ○ |
| Example 17 | 90 | L-Lysine hydrochloride | 10 | 5.74 | △ | △ | ○ | ○ | △ | ○ | ○ |
| Example 18 | 75 | L-Lysine hydrochloride + ammonia | 25 | 10.22 | ○ | ○ | ○ | ○ | ○ | ○ | ○ |
| Example 19 | 75 | Aminoguanidine hydrochloride + ammonia | 25 | 11, 48 | ○ | △ | ○ | ○ | ○ | ○ | × |

Examples 10 to 19 are methods for processing a lithium-ion battery waste according to the present invention, and it is found that cobalt and nickel which are metals to be recovered can be selectively recovered while the recovery rates of aluminum, iron, and manganese which are metals not to be recovered are reduced. In particular, in Example 10 in which ammonium chloride and ammonia were used in combination, Example 12 in which 2-piperazine hydrochloride monohydrate and ammonia were used in combination, Example 13 in which cysteamine hydrochloride and ammonia were used in combination, Example 15 in which ethylenediamine dihydrochloride and ammonia were used in combination, and Example 18 in which L-lysine hydrochloride and ammonia were used in combination, the recovery rates of desired valuable metals such as nickel and cobalt were particularly excellent.

**Claims**

1. A method for processing a lithium-ion battery waste by hydrometallurgical processing of the lithium-ion battery waste to obtain a leachate in which at least cobalt and nickel are dissolved, the method comprising:

   a hydrometallurgical processing step of adding at least one compound (1) selected from the group consisting of ammonia and a salt thereof, and an amine compound and a salt thereof to the lithium-ion battery waste and mixing them to obtain the leachate in which at least the cobalt and the nickel are dissolved; and
   a solid-liquid separation step of removing at least a part of metals not dissolved in the leachate by solid-liquid separation after the hydrometallurgical processing step.

2. The method for processing a lithium-ion battery waste according to claim 1, wherein in the hydrometallurgical processing step, an acid is added in addition to the compound (1) and mixed.

3. The method for processing a lithium-ion battery waste according to claim 2, wherein the acid is at least one compound (2) selected from the group consisting of a monocarboxylic acid organic acid and an inorganic acid.

4. The method for processing a lithium-ion battery waste according to claim 1, wherein the compound (1) is at least one compound selected from the group consisting of an amine compound having an amino group and a salt thereof.

5. The method for processing a lithium-ion battery waste according to claim 1, wherein the compound (1) is at least one compound selected from the group consisting of a chelating amine compound having two or more amino groups and a salt thereof.

6. The method for processing a lithium-ion battery waste according to claim 1, wherein the lithium-ion battery waste contains aluminum, and at least a part of the aluminum is removed in the solid-liquid separation step.

7. The method for processing a lithium-ion battery waste according to claim 1, wherein the lithium-ion battery waste contains iron, and at least a part of the iron is removed in the solid-liquid separation step.

8. The method for processing a lithium-ion battery waste according to claim 1, wherein the lithium-ion battery waste contains manganese, and at least a part of the manganese is removed in the solid-liquid separation step.

## INTERNATIONAL SEARCH REPORT

| International application No. |
|---|
| **PCT/JP2024/014200** |

| A. | CLASSIFICATION OF SUBJECT MATTER |
|---|---|

*C22B 7/00*(2006.01)i; *B09B 3/70*(2022.01)i; *B09B 3/80*(2022.01)i; *B09B 5/00*(2006.01)i; *C22B 3/14*(2006.01)i; *C22B 3/16*(2006.01)i; *C22B 23/00*(2006.01)i; *H01M 10/54*(2006.01)i; *B09B 101/16*(2022.01)n
FI:  C22B7/00 C ZAB; C22B23/00 102; C22B3/14; C22B3/16; B09B3/70; B09B5/00 Z; H01M10/54; B09B3/80; B09B101:16

According to International Patent Classification (IPC) or to both national classification and IPC

| B. | FIELDS SEARCHED |
|---|---|

Minimum documentation searched (classification system followed by classification symbols)

C22B7/00; B09B3/70; B09B3/80; B09B5/00; C22B3/14; C22B3/16; C22B23/00; H01M10/54; B09B101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-542879 A (BASF SE) 07 October 2022 (2022-10-07) claims, paragraphs [0099]-[0102], [0117] | 1, 4-8 |
| A | | 2, 3 |
| X | CN 111600090 A (SOUTHERN UNIVERSITY OF SCIENCE AND TECHNOLOGY) 28 August 2020 (2020-08-28) paragraphs [0005]-[0024], [0029]-[0033] | 1, 4, 6-8 |
| A | | 2, 3, 5 |
| X | CN 109468472 A (JIANGSU UNIVERSITY OF TECHNOLOGY) 15 March 2019 (2019-03-15) paragraphs [0005]-[0023], [0027]-[0034] | 1-3, 6-8 |
| A | | 4, 5 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/014200**

| C. | DOCUMENTS CONSIDERED TO BE RELEVANT | |
|---|---|---|
| Category* | Citation of document, with indication, where appropriate, of the relevant passages | Relevant to claim No. |
| A | CN 111129488 A (CENTRAL SOUTH UNIVERSITY) 08 May 2020 (2020-05-08) entire text, all drawings | 1-8 |
| A | CN 108277367 A (INSTITUTE OF PROCESS ENGINEERING, CHINESE ACADEMY OF SCIENCES) 13 July 2018 (2018-07-13) entire text, all drawings | 1-8 |

Form PCT/ISA/210 (second sheet) (July 2022)

## INTERNATIONAL SEARCH REPORT
### Information on patent family members

| Patent document cited in search report | Publication date (day/month/year) | Patent family member(s) | Publication date (day/month/year) |
|---|---|---|---|
| JP 2022-542879 A | 07 October 2022 | US 2022/0251681 A1 claims, paragraphs [0124]-[0131], [0146] <br> US 2022/0274841 A1 <br> US 2022/0352570 A1 <br> WO 2021/018796 A1 <br> WO 2021/018778 A1 <br> WO 2021/018788 A1 <br> EP 4004245 A1 <br> EP 4004244 A1 <br> EP 4004246 A1 <br> CN 114207162 A <br> KR 10-2022-0038442 A <br> AU 2020323677 A <br> CA 3144899 A1 <br> MX 2022001041 A <br> TW 202107764 A <br> TW 202105823 A <br> TW 202111131 A <br> CN 114174545 A <br> CN 114207161 A <br> KR 10-2022-0038440 A <br> KR 10-2022-0038441 A <br> AU 2020323235 A <br> AU 2020321474 A <br> CA 3144716 A1 <br> CA 3144711 A1 <br> MX 2022001039 A <br> MX 2022001040 A <br> JP 2022-541321 A <br> JP 2022-542362 A | |
| CN 111600090 A | 28 August 2020 | (Family: none) | |
| CN 109468472 A | 15 March 2019 | (Family: none) | |
| CN 111129488 A | 08 May 2020 | (Family: none) | |
| CN 108277367 A | 13 July 2018 | (Family: none) | |

Form PCT/ISA/210 (patent family annex) (July 2022)

**EP 4 715 071 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020180362 A